# EUROPEAN PATENT SPECIFICATION

(11) **EP 4 399 109 B1**
(45) Date of publication and mention of the grant of the patent: **30.04.2025**
(21) Application number: 23758020.4
(22) Date of filing: 07.08.2023
(51) Int. Cl.: B60G 11/26, B60T 13/14, B60T 17/18, B62D 5/07, B62D 5/30

(54) **METHOD AND SYSTEM OF OPERATING A HYDRAULIC SYSTEM**
VERFAHREN UND SYSTEM ZUM BETRIEB EINES HYDRAULISCHEN SYSTEMS
PROCÉDÉ ET SYSTÈME DE FONCTIONNEMENT D'UN SYSTÈME HYDRAULIQUE

(30) Priority: 09.08.2022 US 202263396344 P
(43) Date of publication of application: 17.07.2024
(73) Proprietor: REE AUTOMOTIVE LTD., 4690500 Kibbutz Glil-Yam (IL)
(72) Inventor: SEGEV, Tomer, 6811413 Tel Aviv (IL)
(74) Representative: Pearl Cohen Zedek Latzer Baratz UK LLP
(86) International application number: PCT/IB2023/057959
(87) International publication number: WO 2024/033780

(56) References cited:
- DE-A1- 2 504 712
- DE-A1- 3 612 944
- DE-T2- 60 011 828

## Description

### TECHNICAL FIELD

The present invention relates to a hydraulic system for a vehicle, and more particularly, to a redundant hydraulic system for controlling a plurality of hydraulic systems.

### BACKGROUND

In automotive vehicles, the steering system, the brake system, and suspension system are all typically independent components. Each of the systems may have some hydraulic aspect thereto. Braking systems have hydraulic fluid that are used to actuate the calipers at each wheel. The steering systems have hydraulic fluid that is used to assist the driver in steering the vehicle. Suspension systems have hydraulic dampers that isolated the vehicle body from the suspension of the vehicle. Suspension systems also are used for active ride height control. Active ride height control allows the body of the vehicle to be raised and lower according to various operating conditions or conditions set by the vehicle operator.

Operating the vehicle in safe operating conditions is important. When systems, such as brakes and steering, do not operate properly, backup systems typically are used to ensure the vehicle can come to rest in a safe location. Adding independent redundant backup systems for braking, steering and suspension systems is expensive.
German national patent application publication DE 2504712 A1 discloses hydraulic systems according to the preambles of claims 1 and 3 as well as a system according to the preamble of claim 14. DE2504712 A1 describes that a central hydraulic system of a vehicle has a single pump which supplies various fluid reservoirs via non return valves, with the excess fluid returned for recirculation. Servo assisted brakes and servo steering are further protected by spring loaded control valves which ensure adequate pressure for these systems in the event of fluid loss elsewhere. To provide a non-jamming valve element the valve has a piston which balances the reservoir and pump pressures in a smooth cylinder bore, without any lateral. The piston is attached to a ball valve element by a rigid shaft and is held against the valve seating by a spring.
German national patent application publication DE 3612944 A1 discloses that in a hydraulic system for a motor vehicle, an auxiliary pressure source has a motor/pump unit and a storage and pressure compensation reservoir and the adjustable suspension units arranged between the vehicle body and an axle each consist of a working cylinder with a working piston moving therein and having valve devices which control flow of a pressure medium in the piston chamber from one side to the other of the working piston, and with a separating piston separating the piston chamber from a gas-filled chamber separated by a further movable wall from a pressure chamber filled with pressure medium for the purpose of level adjustment of the vehicle body. The pressure-medium-filled chamber of each adjustable suspension means is connectable via a respective pressure line and change-over valve and a common change-over valve with the auxiliary pressure source which also communicates with the wheel brakes of the vehicle via a pressure control valve and pressure modulation valves. Upon failure of the auxiliary pressure source the wheel brakes of the rear wheels can be braked by being connected to the chambers of the adjustable suspension means.
German national patent application publication DE 600 11 828 T2 discloses a braking system for a motor vehicle with hydropneumatic suspension. The suspension comprises, for each wheel, a suspension element of the cylinder and piston type, containing a volume of suspension fluid and capable of communicate with a source of suspension fluid via solenoid valves controlled by computing means, the braking system comprising a brake pedal and a brake caliper associated with each wheel and adapted to receive brake fluid from a brake fluid source, under the control of the brake pedal. The braking system is characterized in that the source of braking fluid for a wheel is constituted by the liquid under pressure contained in the suspension element associated with this wheel.

### SUMMARY

The statements in this section merely provide background information related to the present disclosure and may not constitute prior art.

The present disclosure provides a backup system for the brake system and the steering system of a vehicle using components of the suspension system.

In one aspect of the disclosure, a hydraulic system for a vehicle includes a first hydraulic fluid reservoir. The system also includes a braking system fluidically coupled to the first hydraulic fluid reservoir. The system also includes a second hydraulic fluid reservoir. The system also includes a suspension system fluidically coupled to the second hydraulic fluid reservoir. The system also includes a valve system selectively fluidically coupling the braking system to the suspension system and the valve system selectively coupling a steering system of the hydraulic system to the second hydraulic fluid reservoir.

Other aspects include the first hydraulic fluid reservoir fluidically coupled to the second hydraulic fluid reservoir.

One general aspect includes a hydraulic system for a vehicle. The hydraulic system also includes a first high pressure accumulator. The system also includes a braking system fluidically coupled to the first high pressure accumulator. The system also includes a suspension system fluidically coupled to a second high pressure accumulator. The system also includes a valve system selectively coupling the braking system to the first high pressure accumulator or the second high pressure accumulator.

Other aspects further include a hydraulic pressure module comprising the first high pressure accumulator, the hydraulic pressure module further comprising a pump and a valve disposed between the high pressure accumulator and the pump, the hydraulic pressure module is disposed within a housing, further comprising pressure regulators regulating hydraulic fluid pressures into the braking system, further comprising a fluid reservoir fluidically coupled to the first high pressure accumulator, the suspension system comprises an active ride height control system, further comprising an emergency power source coupled to and powering the valve system and the valve system comprising a first mode coupling a hydraulic pump to the first high pressure accumulator and a second mode operating the brake system with the pressurized hydraulic fluid from the second high pressure accumulator. The system further comprises the valve system switching from the first mode to the second mode based on a power loss to the system or a malfunction of a pressure system, and further comprising a steering system fluidically coupled to the first high pressure accumulator and wherein the valve system selectively couples the braking system and steering system to the first high pressure accumulator or the second high pressure accumulator.

In another aspect, a vehicle comprises a plurality of corner modules, each corner module comprising a first high pressure accumulator. The system also includes a braking system fluidically coupled to the first high pressure accumulator. The system also includes a suspension system fluidically coupled to a second high pressure accumulator. The system also includes a valve system selectively coupling the braking system to the first high pressure accumulator or the second high pressure accumulator.

Other aspects of the vehicle include each corner of the vehicle comprises a respective one of the plurality of corner modules.

In another aspect, a method of operating a vehicle comprises pressurizing a first high pressure accumulator of associated with a suspension system with pressurized hydraulic fluid from a damper, said pressurizing caused by a weight of the vehicle, communicating the hydraulic fluid from the high pressure accumulator to a brake system through a valve system, and operating the brake system with the pressurized hydraulic fluid from the high pressure accumulator.

In other aspects of the method, prior to communicating the hydraulic fluid from the high pressure accumulator, operating the brake system from a hydraulic pump when the valve system is disposed in a first mode and switching the valve system to a second mode before operating the brake system with the pressurized hydraulic fluid from the high pressure accumulator, switching the valve system is based on a loss of power to the valve system, switching the valve system is based on a malfunction of a pressure system, further comprising communicating the hydraulic fluid from the high pressure accumulator to a steering system by the valve system within the valve system, further comprising communicating hydraulic fluid to the high pressure accumulator from an active ride right control suspension system, and communicating hydraulic fluid to the high pressure accumulator from the active ride height control suspension system comprises communicating hydraulic fluid to the high pressure accumulator from a ride height portion of a damper of the active ride right control suspension system.

In a further aspect, a system for operating a vehicle comprises a hydraulic pump, a first high pressure accumulator receiving hydraulic fluid from the hydraulic pump, a braking system coupled to the first high pressure accumulator, a second high pressure accumulator receiving hydraulic fluid from the hydraulic pump, a steering system coupled to the second high pressure accumulator, a third high pressure accumulator receiving hydraulic fluid from the hydraulic pump, a suspension system coupled to the third high pressure accumulator and a valve system selectively coupling the braking system and steering system to the hydraulic pump or the third high pressure accumulator.

In another aspect, the suspension system comprises an active ride height control system.

Further areas of applicability will become apparent from the description provided herein. It should be understood that the description and specific examples are intended for purposes of illustration only and are not intended to limit the scope of the present disclosure.

### BRIEF DESCRIPTION OF THE DRAWINGS

The present invention will become more fully understood from the detailed description and the accompanying drawings, wherein:
Fig. 1 is a block diagrammatic view of an electric vehicle, according to some embodiments of the present disclosure.
Fig. 2 is a high level block diagrammatic view of a suspension system, according to some non-claimed examples of the present disclosure.
Fig. 3 is a high level block diagrammatic view of an high pressure accumulator in a system with a braking high pressure accumulator and a steering high pressure accumulator, according to some embodiments of the present disclosure.
Fig. 4 is a high level block diagrammatic view of a hydraulic system using the suspension pressure, according to some non-claimed examples of the present disclosure.
Fig. 5 is a high level block diagrammatic view of the system of Fig. 4 with an emergency power source and emergency controller for controlling the system.
Fig. 6 is a high level flowchart of a method for operating the system, according to some embodiments of the present disclosure.

### DETAILED DESCRIPTION

The following description is merely exemplary in nature and is not intended to limit the present disclosure, application, or uses. For purposes of clarity, the same reference numbers will be used in the drawings to identify similar elements. As used herein, the term module refers to an application specific integrated circuit (ASIC), an electronic circuit, a processor (shared, dedicated, or group) and memory that execute one or more software or firmware programs, a combinational logic circuit, and/or other suitable components that provide the described functionality. As used herein, the phrase at least one of A, B, and C should be construed to mean a logical (A or B or C), using a non-exclusive logical OR. It should be understood that steps within a method may be executed in different order without altering the principles of the present disclosure. The teachings of the present disclosure can be implemented in a system for electronically communicating content to an end user or user device. Both the data source and the user device may be formed using a general computing device having a memory or other data storage for incoming and outgoing data. The memory may comprise but is not limited to a hard drive, FLASH, RAM, PROM, EEPROM, ROM phase-change memory or other discrete memory components.

More specifically, some embodiments relate to operation of a vehicle comprising a plurality of vehicle corner modules. Unless otherwise indicated, a "vehicle corner module" or "VCM" as used herein means an assembly for supporting a wheel of a vehicle and regulating the motion of a vehicle according to any of the embodiments disclosed herein. The VCM assembly includes components such as (and not exhaustively): steering systems, suspension systems, braking systems including hydraulic sub-systems, gearing assemblies, drive motors, driveshafts, wheel hub assemblies, controllers, communications arrangements, and electrical wiring. In some embodiments, a VCM can include a wheel and tire. A VCM can be mounted to a 'reference frame' of a vehicle, e.g., a chassis or similar vehicle frame or a platform, although the mounting need not necessarily be done 'as a unit'. When a VCM is described as being installed in/on a vehicle, then the VCM is mounted to the reference frame. A VCM may include a 'sub-frame' to which some or all of the VCM components are mounted or otherwise attached such that the sub-frame mediates between the reference frame and the various VCM components. The term 'sub-frame' should be understood to mean any rigid frame or one or more structural elements in fixed combination. The 'sub' prefix is intended to distinguish the sub-frame from a main frame or reference frame of the vehicle. A VCM may or may not include one or more electric motors and/or the wheel itself (and tire).

When used in this specification and in the claims appended hereto, the word "vehicle" is to be understood as referring to a motorized vehicle having one or more wheels. Non-limiting examples of a vehicle, according to this definition, are a vehicle with motive power provided by an on-board engine, and an 'electric vehicle' powered, when in motion, by one or more electric motors and a battery or other energy storage device on-board. The battery need not be provided with the vehicle, or installed in the vehicle, unless and until the vehicle is in motion. The word 'vehicle' should also be understood as encompassing a "vehicle platform" comprising at least a chassis (or other 'reference frame' to which wheel assemblies can be mounted) and one or more wheels. A 'vehicle platform' need not necessarily comprise, at the time of providing the vehicle platform, all of the accoutrements required for transport of passengers and/or cargo such as vehicle-body components or interior furnishings.

As disclosed hereinbelow, operation of a vehicle, including regulating the actuation of one or more sub-systems performing operational functions, can be controlled and/or managed by one or more VCM-controllers. A VCM-controller is a controller installed on-board a VCM and programmed to regulate the actuation of at least one of the functional sub-systems at least in its own VCM. Some VCM-controllers are programmed, i.e., have access to program instructions executable by one or more processors of the VCM-controller, to regulate the actuation of a plurality of functional sub-systems in the VCM or of all the functional sub-systems in the VCM. As will be further described, in some embodiments of the invention, a VCM-controller can be additionally programmed to regulate the actuation of at least one of the functional sub-systems of one or more other VCMs. In embodiments, a VCM-controller can be additionally programmed to regulate the actuation of a plurality of functional sub-systems in the one or more other VCM or of all the functional sub-systems in the one or more other VCMs.

The expression 'regulate actuation' as used herein means to perform a control function that includes, but not exhaustively: activation, cessation, modulation, and management of a physical and/or electrical and/or electronic function. Regulating actuation can also include monitoring the operation and/or performance of a functional sub-system and actively performing or changing a control function in response to information received in the monitoring. Regulating actuation can also include any or all of conducting test procedures on the regulated or controlled sub-systems, collecting operational and maintenance data on the regulated or controlled sub-systems, and maintaining and communicating status information of the regulated or controlled sub-systems.

The term "controller" as used herein means a computing device configured for monitoring, controlling, regulating and/or actuating one or more components, systems or sub-systems. A controller should be understood to include any or all of (and not exhaustively): one or more processors, one or more computer-readable media, e.g., transient and/or non-transient storage media, e.g., media containing program instructions for execution by the one or processors, communications arrangements, one or more power sources and/or a connection to a power source, and firmware and/or software. When used herein in a hyphenated expression such as vehicle-controller or VCM-controller, the term means a controller for controlling the vehicle and/or components and/or sub-systems of the vehicle, or a controller for controlling the VCM and/or components and/or sub-systems of the VCM, respectively. Unless specifically noted otherwise, a controller is installed in or on the controlled element (vehicle, VCM, etc.). For example, a VCM-controller is located in or on the VCM which is the primary VCM for control by that VCM-controller. Controllers (and control units) can be programmed in advance, e.g., by having program instructions stored in the computer-readable media for execution by one of more processors of the controller. Thus, a controller 'configured' to perform a function is equivalent herein to the controller being programmed, i.e., having access to stored program instructions for execution, to perform said function. A VCM-controller, according to embodiments, can regulate actuation of a function, e.g., a function performed by a mechanical and/or electrical sub-system of a VCM; such regulation can be of the function in a VCM-controller's 'own respective VCM' or in any other VCM (or VCMs) with which the VCM-controller is in electronic communication; such electronic communication can be with a VCM-controller of the other VCM or VCMs and/or with any systems or sub-systems of the other VCM or VCMs. Regulating actuation of a function (or, equivalently, of a sub-system configured to perform such a function) can include the entire range of operations related to the function. In a non-limiting example, a drive function performed by a drive sub-system can include starting, accelerating, speedkeeping, slowing (e.g., using the engine mass or in concert with another sub-system such as, for example, a braking sub-system), and stopping. A VCM-controller can include multiple control modules, for example control modules that are programmed to control specific functions such braking, steering, etc.

In some embodiments, a vehicle may be fully controlled through all aspects of the vehicle operation where all computing work is carried out by one or more of the computing units of the VCMs, i.e., the VCM-controllers. A VCM may be in active communication not only with the vehicle platform but also, or alternatively, with at least one other VCM. VCMs of a vehicle may be all of the same type or may differ having same type at the front and having another type at the rear of the vehicle. In some other examples VCMs of one side may be of the same type and VCMs of the other side may be of a different type. For example, in a specific type of vehicle the front VCMs may be steerable and motorized while the rear VCMs may lack steering and/or motorizing capabilities. In another example, the VCMs may differ from each other by the sensors they are equipped with. In such embodiments VCMs that have more sensors may communicate relevant data to other VCMs lacking these sensors. In another example, the VCMs may differ from each other by having different performance profiles (e.g., size, response, power).

The terms "communication" "communicate" or similar terms such as "communications schemes" as used herein mean any wired connection or wireless connection via which data communications can take place. Non-limiting and non-exhaustive examples of suitable technologies for providing communications arrangements include any short-range point-to-point communication system such as IrDA, RFID (Radio Frequency Identification), TransferJet, Wireless USB, DSRC (Dedicated Short Range Communications), or Near Field Communication; wireless networks (including sensor networks) such as: ZigBee, EnOcean; Wi-fi, Bluetooth, TransferJet, or Ultra-wideband; and wired communications bus technologies such as. CAN bus (Controller Area Network, Fieldbus, FireWire, HyperTransport and InfiniBand. "Establishing a communications link" as used herein means initiating and/or maintaining data communications between two or more processing units (e.g., controllers, computers, processors, etc.) in accordance with any of the communications protocols supported by the two or more communicating nodes.

As used throughout this disclosure and the claims appended hereto, the term "electrical signals" or similar terms such as "electrical inputs" means electrical and/or electronic and includes any transmission of either direct or alternating electric current, of electronic information, or of any combination of electrical and electronic signals and information. As used throughout this disclosure and the claims appended hereto, the term "signals" without a modifier (such as, e.g., "electrical") means electrical, electronic and/or optically-transmitted signals but does not include mechanically transmitted 'signals', e.g., instructions. Examples of electrical signals included in the definition of 'signals' include any one or any combination of voltage, current, power, resistance and capacitance transferred or propagated so as to reach a VCM (including, in some examples, VCM-controller. By their nature, electrical signals (excluding electronic signals) are transferred over physical connections. Examples of electronic signals include any type or format of data communication transmitted over wire or wirelessly, and can include, and not exhaustively: specific or implicit instructions for actuation, regulation or cessation of operation of a VCM system or sub-system; sensor data and/or status, alarm/fault indications including fault-condition statuses and instructions; periodic, scheduled, and/or special status requests and messages; test messages; and diagnostic requests and results. Examples of optically-transmitted signals include, without limitation, the foregoing examples of electronic signals, although transmitted at least in part over optical communications infrastructure.

A "control system" as the term is used herein means a networked system that includes coordinated and/or networked plurality of controllers. In one example, a control system can include a network of VCM-controllers that comprises all of the VCM-controllers of a vehicle. In another example, the control system can additionally include a vehicle-controller. In other examples, the control system can additionally include other controllers such as, for example, a power management system, a battery management system, or a thermal management system. An autonomy computer can be present and in data communication with the control system.

Each general-purpose computing device may be implemented electronically in analog circuitry, digital circuitry or combinations thereof. Further, the computing device may include a microprocessor or microcontroller that is programmed to perform instructions to carry out the steps performed by the various system components.

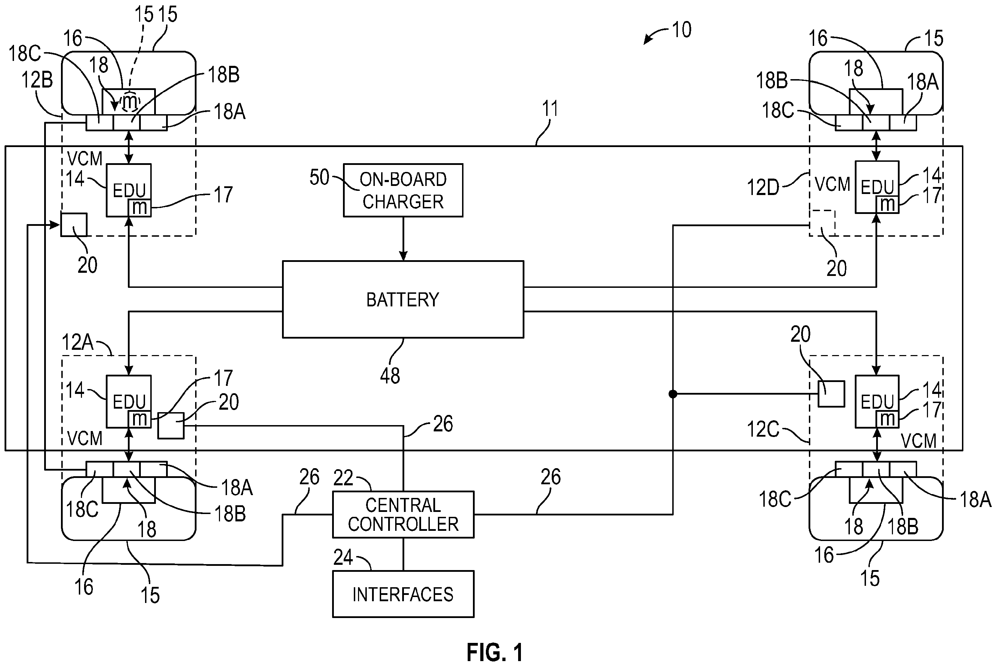

Referring now to Fig. 1, a vehicle 10 having a vehicle chassis, frame, or platform 11 is illustrated. The automotive vehicle 10 in this example is an electric vehicle. However, the present disclosure may apply to various types of vehicles including hybrid vehicles and internal combustion engine vehicles.

By way of example, the vehicle 10 has plurality of vehicle corner modules 12A, 12B, 12C and 12D. In this example, vehicle corner module 12A corresponds to the front left position of the vehicle 10, vehicle corner module 12B corresponds to the front right position, vehicle corner module 12C corresponds to the rear left position and vehicle corner module 12D corresponds to the rear right position. In the present example, the components of the vehicle corner modules 12A-12D may be configured identically. However, the components within each vehicle corner modules 12A-12D, for example brake system, steering system, drive system, active suspension system, and thermal system, may also vary based upon the position in the vehicle. Although vehicle corner modules 12A-12D are illustrated, the present disclosure applies equally to vehicles not employing corner modules. For example, vehicles having vehicle systems such as a brake system, a steering system, a drive system, an active suspension system in front or rear without being employed within a designated corner assembly may implement the teachings herein.

The vehicle corner modules 12A-12D may include various sensor motors, controllers and actuators to perform various vehicle functions. In the present example, only relevant components are illustrated. In this example, an electric drive unit 14 may be coupled to each of the wheels 15 at each of the corners of the vehicle 10 and is associated with a wheel hub 16. A motor 17 may be disposed within the wheel hubs 16 (illustrated dashed in one hub 16 for simplicity) or within the electric drive unit 14, as illustrated. In other examples, only one motor and one electric drive unit 14 may be used. Various numbers of motors 17 and electric drive units 14 may be used in a vehicle.

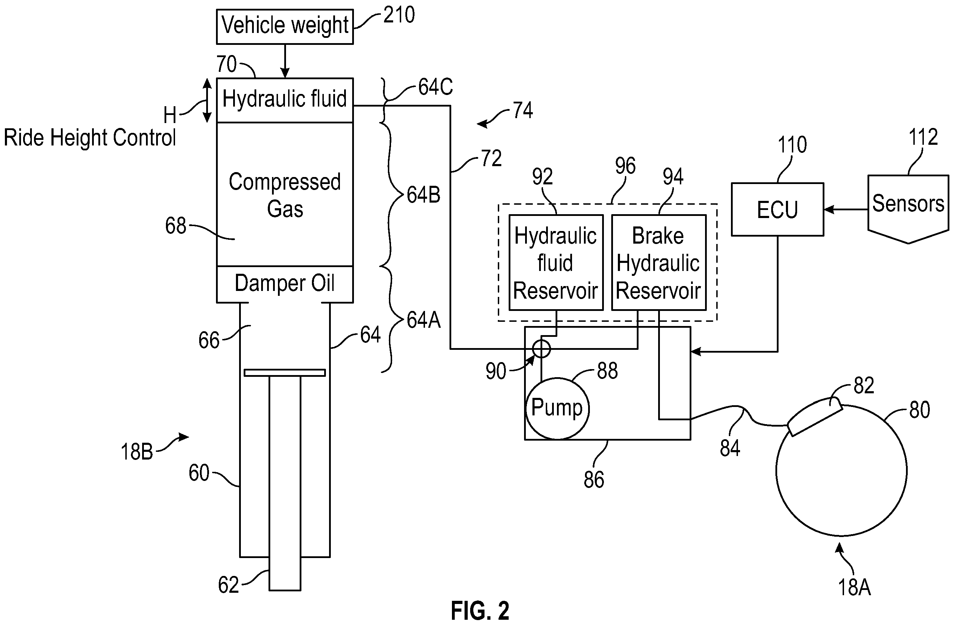

A hydraulic system 18 uses hydraulic fluid to perform various vehicle functions. Examples of hydraulic systems include but are not limited to a brake system 18A, a suspension system 18B and a steering system 18C. The brake system 18A uses hydraulic fluid to move brake calipers to slow the vehicle at each of the vehicle corner modules 12A-12D. The suspension system 18B regulates the reaction of the vehicle as the wheels follow the road contours. The suspension system 18B may be an active ride height control suspension system as described in further detail below in Fig. 2. The steering system 18C may be hydraulic, using hydraulic fluid to move various actuators that ultimately turn the wheel 15 associated with each corner module 12A-12D in the desired direction. In some other embodiments, steering system 18C is electric, having electric motor actuator. One or more of the systems 18A,18B, 18C may be located within the vehicle corner modules 12A-12D depending on the vehicle configuration. For example, not all vehicle corner modules 12A-12D may have the steering system 18C associated therewith.

According to some embodiments, a communication network controller 20, disposed at each corner, is used to communicate to and from a central controller 22. The central controller 22 may receive various inputs from various interfaces 24, such as a brake pedal, a hand wheel, switches, dials, touch screens, buttons and computerized interfaces. Such input may be directly input at the vehicle or communicate to the vehicle wirelessly via a Bluetooth^{™} or other wireless means. The central controller 22 coordinates the communication between the vehicle corner modules 12A-12D and more specifically, the communication network controllers 20 through a controller area network 26. In other alternative embodiments, vehicle 10 may include multiple vehicle level controllers 22. In other examples, fewer level controllers than corners may be used. For example, front or rear of the vehicle only. In some other alternatives, there is some direct communication (e.g., peer to peer) communication between corner level controllers 20.

Power is provided to the vehicle by a high voltage battery 48. In one example, the high voltage battery 48 is 400 volts. However, the voltage may be varied in different designs. The battery 48 is electrically coupled to the electric drive units 14 that drive the motors 17. An on-board charger 50 is used to charge the battery 48. Note that there are some other alternative power architectures. For example, dividing power sources (batteries) between front and rear corner, having backup batteries, and electrifying only front or rear corners.

Referring now to Fig. 2, a portion of the suspension 18B is set forth. The suspension 18B illustrated may be individual components or the components may be incorporated into one of the VCMs 12A-D. The suspension 18B has a damper 60having a piston 62 that is disposed within a housing 64. The piston 62 is coupled to suspension components that are ultimately coupled to the wheels 15. In this example of damper 60, damper 60 has its vertical movement damped by damper oil 66 that is disposed within a damper oil portion 64A of the housing 64. Vertical upward from the damper oil is compressed gas 68 in a compressed gas portion 64B of the housing 64. The compressed gas 68 is an intermediate to compress the hydraulic fluid to prevent cavitation. Other examples of dampers may apply as well. In addition to the previous example, an airbag damper, v a damper having an electric motor may be used to control its operational profile such as setting the stiffness.

In this example, the damper 60 is part of an active ride height control system 74. Disposed vertically above the compressed gas layer 68 is a hydraulic fluid 70 in a hydraulic fluid portion 64C of the housing 64. The thickness of the hydraulic fluid 70 changes the ride height H of the vehicle. That is, by increasing the amount of hydraulic fluid within the damper 60, the ride height H may be increased by moving the damper 60 outward from the housing 64. Conversely, when the ride height H is to be decreased, the amount of hydraulic fluid 70 within the hydraulic fluid portion 64C is reduced. Other examples of hydraulic fluid portion 64C may include having hydraulic fluid 70 within a container outside of housing 64 and control the movement of damper 60 by being in fluid communication or mechanical connection with damper 60 to change ride height H.

Hydraulic fluid 70 is communicated to and from the hydraulic fluid portion 64C of the housing 64 through a hydraulic line 72.

A portion of the brake system 18A is illustrated. The brake system 18A includes a brake rotor 80 and a brake caliper 82. A hydraulic line 84 is coupled to the brake caliper 82. In some other alternative, brake system 18A is a drum brake actuate by fluid communication to hydraulic line 84. The brake system 18A has a corner brake module 86 communicates hydraulic fluid to control the ride height H of the suspension 18B through the hydraulic line 72. The corner brake module 86 also communicates hydraulic fluid to the brake caliper 82 through the hydraulic line 84. In this example, the same hydraulic fluid such as specified by the Department of Transportation (DOT, such as DOT 3, 4, 5 or 5.1) is used.

The corner brake module 86 includes a hydraulic pump 88 and a solenoid valve 90. The pump 88 is used to pressurize the hydraulic lines 72, 84.

The corner brake module 86 is fluidically coupled to a hydraulic fluid reservoir 92. The hydraulic fluid reservoir 92 communicates hydraulic fluid to the damper 60.

A brake hydraulic reservoir 94 communicates fluid to the brake system 18A. The pump 88 pressurizes fluid from the hydraulic fluid reservoir 92 so that the hydraulic fluid is pressurized and communicated to the damper when the ride height H is to be increased. The solenoid valve 90 allows fluid to be returned to the hydraulic fluid reservoir 92 when the ride height H is to be decreased. The pump 88 also pressurizes the fluid that is communicated to the brake hydraulic reservoir 94 which is then communicated to the brake caliper 82 so that braking of the vehicle may be maintained.

The fluid reservoirs 92 and 94 may be combined into a unitary reservoir 96 because the hydraulic fluid 70 may be the same as the fluid used for the brake system 18A.

The system in Fig. 2 has a common pump 88 used for pressurizing both the hydraulic fluid for the damper and the brake caliper 82. By allowing the pump 88 to control both systems, the number of vehicle components are reduced. Likewise, hydraulic fluid 70 from the damper 60 may be used to provide pressure to the brake hydraulic reservoir 92 in the event of power loss or other low pressure condition. Due to the vehicle weight 210 and as the vehicle transverses uneven terrain, the pressure within the ride height control portion (hydraulic fluid portion 64C) of the housing 64 damper pressurizes the hydraulic fluid 70 that may be communicated to the brake caliper through the solenoid valve 90.

An electronic control unit (ECU) 110 is used to control the pump 88 and components within the corner brake module 86. The ECU 110 may be included at each corner, such as in or part of the corner control module 20. The ECU 110 may be part of the central controller 22 A plurality of sensors 112 such as a ride height sensor and other sensors may be used as an input to the electronic control unit 110. A ride height sensor generates a signal that corresponds to the height of the vehicle above the road. As the vehicle brakes, the load may shift forward compressing the front suspension more and therefore the ride height and the hydraulic fluid 70 within the damper 60 may be increased by the control system to level out the vehicle. Likewise, cornering may also be compensated for using the active ride height control aspect of the suspension 18B. Further, upon placing a load within the rear of the vehicle, the ride height may be changed to increase the amount of hydraulic fluid within the damper at the rear corners of the vehicle.

Sensors 112 may also include various dynamic sensors such as a lateral and longitudinal accelerometers and various moment sensors. The sensors 112 may be included in an inertial measurement unit (IMU).

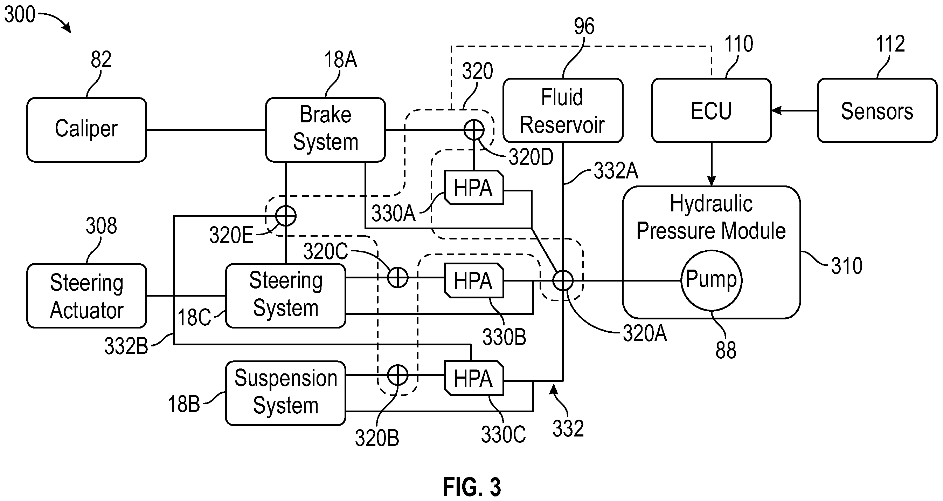

In Figures 3-5, the components may be separate components located in various positions within the vehicle or the components may be incorporated into one of the VCMs 12A-12D.

Referring now to Fig. 3, one example of a high-pressure accumulator system 300 is set forth. In this example, the brake system 18A, the steering system 18C and the suspension 18B are all illustrated in a simplified form. As illustrated in Fig. 2, various components may comprise the brake system 18A and the suspension system 18B. Likewise, the steering system 18C may include a steering actuator 308 that uses hydraulic fluid to turn the wheel or wheels of the vehicle. Control of the steering system 18C may be controlled by the central controller 22.

In this example, one common fluid reservoir 96 is illustrated. A hydraulic pressure module 310 includes the pump 88 described above. The hydraulic pressure module 310 controls the pump 88 to pressurize the hydraulic fluid from the fluid reservoir 96. The pump 88 and the fluid reservoir 96 are fluidically coupled to a valve system 320. The valve system 320 in this example includes valves 320A, 320B, 320C, 320D and 320E that are selectively operated to communicate pressurized hydraulic fluid. In general, the ECU 110 is used to selectively control the valves 320A-320E of the valve system 320 into basic modes of operation. In the first mode of operation the system operates normally and in a second mode of operation a default state of the valves 320A-320E within the valve system 320 is reached, which is described in further detail below.

The system 300 also includes three high pressure accumulators 330A, 330B and 330C. Although three high pressure accumulators 330A-330C are illustrated in this example, other examples have fewer or higher pressurize accumulators. For example, high pressure accumulators 330A and 330B may be combined. The high pressure accumulators 330A-330C are fluidically coupled to the brake system 18A, the suspension system 18B and the steering system 18C.

Hydraulic lines 332 allow intercommunication of hydraulic fluid from the pump 88, the high pressure accumulators 330A-330C and the valves 320A-320E. In particular, the pump 88 is in communication with the fluid reservoir 96 and the high pressure accumulator 330A, 330B and 330C. Hydraulic fluid is communicated from the high pressure accumulator 330A through the valve 320D to the brake system during normal operation. The hydraulic fluid from the high pressure accumulator 330B is communicated to the steering system 18C through the valve 320C. The hydraulic fluid is communicated from the high pressure accumulator 330C through the valve 320B. In operation, the pump 88 pressurizes the fluid within the high pressure accumulators 330A, 330B and 330C. In the first mode, the respective valves 320B, 320C and 320D are powered and controlled to be open to allow the high pressurize hydraulic fluid into the respective systems 18A-18C.

In the event of an electrical failure or failure of communication from the ECU 110, the valve 320B may be a normally opened valve and is thus opened under no power. Valves 320C and 320D may be a normally closed valve and thus closed with no power provided thereto.

Valve 320E may be a normally open valve and valve 320A may be a normally closed valve. As can be seen, a hydraulic line 332B is in communication from the high pressure accumulator 330C to the valve 320E. Upon the failure of power or a malfunction of a pressure system a second mode of operating the valve system 320 is entered, the valve 320E is opened and the high pressure hydraulic fluid from the high pressure accumulator 330C is communicated through the hydraulic line 332B to both the braking system 18A and the steering system 18C. As the suspension system 18B traverses uneven terrain, the hydraulic fluid 70 in the ride height control portion (hydraulic fluid portion 64C) of the damper housing 64 provides pressurized fluid to the high pressure accumulator 330C due to the weight of the vehicle. This allows emergency braking at the braking system 18A and emergency steering at the steering system 18C. While both the braking system and the steering system 18C are illustrated as coupled to the valve 320E, the braking system 18A or the steering system 18C may be independently controlled. For example, only the braking system 18A may be provided with pressurized fluid from the high pressure accumulator 330C.

It should be noted that the valves in the valve system may be combinations of various valves and may include pressure regulators and/or a check valve for communicating fluid therethrough.

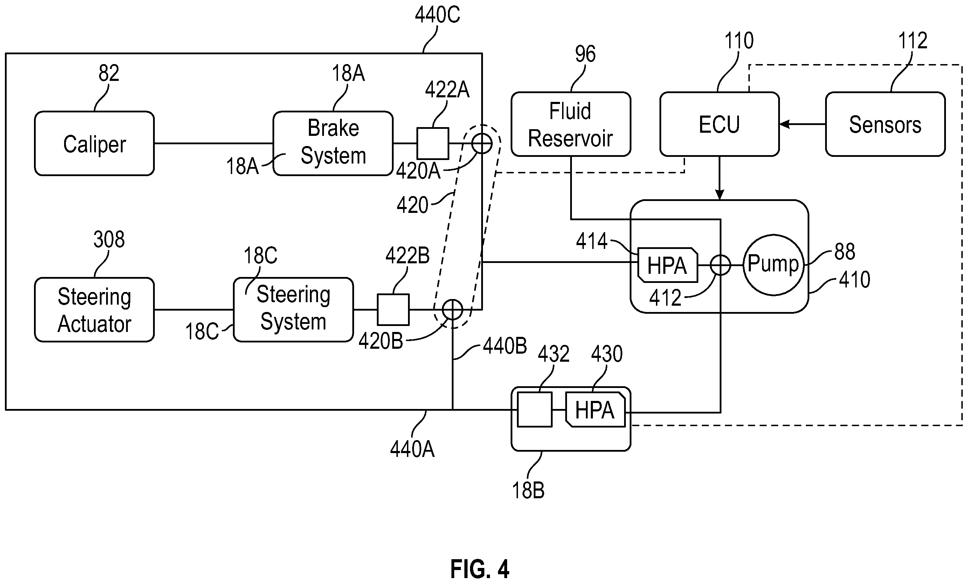

Referring now to Fig. 4, the same reference numerals used above are provided in this figure. In this example, a hydraulic pressure module 410 includes the pump 88, a valve 412 and a high pressure accumulator 414. The valve 412 provides hydraulic fluid to the system from fluid reservoir 96 that has the pressure increased by the pump 88. During normal operation, the high pressure accumulator 414 communicates fluid to a valve system 420 which in this example comprises a valve 420A and a valve 420B. The valve 420A communicates hydraulic fluid from the high pressure accumulator 414A through a pressure regulator 422A to the brake system 18A. The high pressure accumulator 414 communicates hydraulic fluid to the steering system 18C through a valve 420B and a pressure regulator 422B.

The valve 412 of the hydraulic pressure module 410 also communicates hydraulic fluid to a high pressure accumulator 430. The pressure accumulator 30 is in fluid communication with the valve 420A and the valve 420B through a pressure regulator 432. Both the high pressure accumulator 430 and the pressure regulator 432 may be disposed within the suspension system 18B'.

In operation, the ECU 110 receives the signals from sensors 112 such as ride height sensor or other vehicle sensors such as, but not limited to, accelerometers, wheel speed sensors and moment sensors. The ECU 110 selectively controls the operation of the valve system 420 and the operation of the suspension 18B'. More, specifically, the valve system selectively couples the braking system to a first high pressure accumulator or a second high pressure accumulator based on various fault conditions as described below. In normal operation(a first mode), the pump 88 pressurizes the fluid to the brake system 18A, the suspension 18B', and the steering system 18C. When a fault is detected in the system or a fault occurs, such as an electrical fault such as a power loss to the system or a malfunction of a pressure system, the second mode of operation of the valve system is entered where the high pressure accumulator 430 acts as a pressure source for emergency braking of the brake system 18A and a hydraulic source for the steering system 18C. During normal operation during a first mode, fluid is communicated from the high pressure accumulator 414 through the valves 420A and 420B. The path from the valves 420A and 420B to the suspension system 18B are closed. When power is no longer provided to the vehicle, the valves 420A and 420B open to allow the high pressure accumulator to communicate high pressure hydraulic fluid to the brake system 18A and the steering system 18C through the hydraulic lines 440A, 440B and 440C.

The high pressure accumulator 430 is pressurized by the force of the piston 62 pressing on the hydraulic fluid 70 as illustrated in Fig. 2. The vehicle weight 210 acts on the housing 64 of the damper 60 as illustrated in FIG. 2 and provides a source of hydraulic energy to the high pressure accumulator 430 which, in turn, is communicated to both the brake system 18A and the steering system 18C through the respective valves 420A and 420B.

As the vehicle weight 210 pressurizes the high pressure accumulator 430, enough pressure is within the high pressure accumulator 430 to provide hydraulic fluid to the brake system 18A and the steering system 18C for emergency stopping and steering. The pressure regulators 422A and 422B are sized to allow the right amount of pressure to each of the systems so that each of the systems 18A, 18C have the proper amount of flow rate thereto.

This allows pressure to the system when the power is lost at the pump 88 and the electrical system is no longer functioning or other pressure system malfunctions such as but not limited to malfunctioning valves, a malfunctioning pump, malfunctioning communication systems and the like.

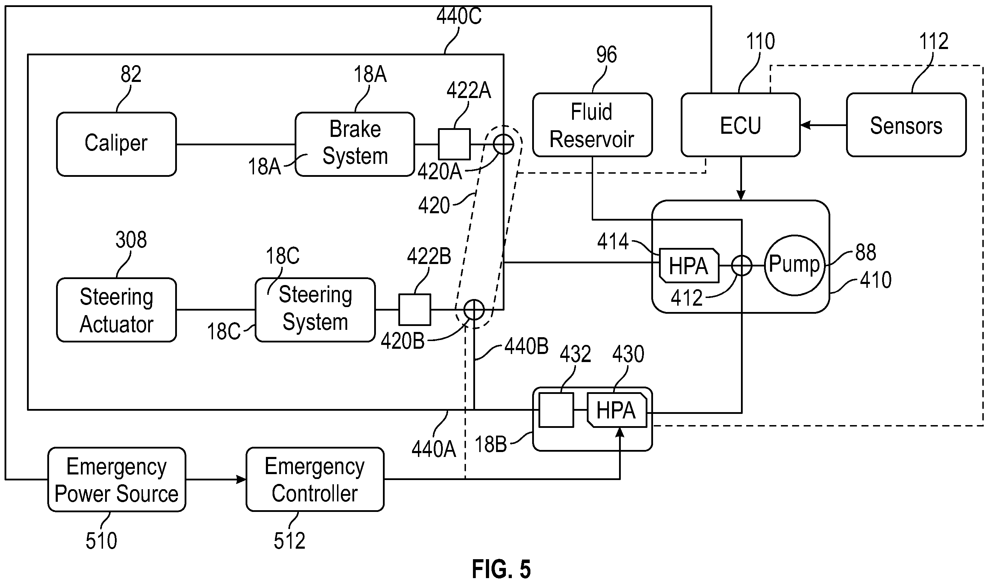

Referring now to Fig. 5, an emergency power source 510 coupled to an emergency control 512 is used to control the valve system 420 to allow the brake system 18A and the steering system 18C to be fluidically coupled to the high pressure accumulator 414 and receive hydraulic fluid through the valves 420A and 420B as described above. In this manner, the emergency controller 512 can provide further functions and control the valves to allow a more controlled stop and controlling of the vehicle in case of a failure. The emergency power source 510 may include a long life battery that may be non-rechargeable. The battery within the emergency power source may have an extra-long shelf life such as between 10 and 15 years. The controller 512 also controls the suspension system 18' to allow accumulated pressure to be provided to the brake system 18A and the steering system 18C. The emergency power source 510 has enough power to allow the vehicle to safely be braked and steered for a predetermined amount of time. However, in this example, the emergency power source 510 does not provide enough power to allow the pump to provide enough hydraulic pressure for the system. Rather, the high pressure accumulator 430 provides the pressure to the brake system 18A and the steering system 18C.

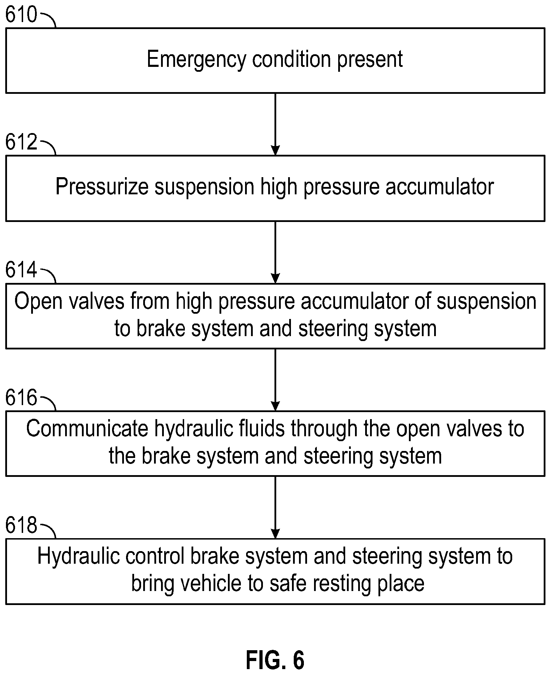

Referring now to Fig. 6, a method of operating the system at a high level is set forth. In step 610, a condition such as an emergency condition is present. As mentioned above, the emergency condition may be the total loss of power to the vehicle, the loss of pressure to the fluid reservoir, a lack of communication with the ECU 110 or the like. In step 610, the suspension is pressurized from the active ride height control portion of the suspension system. In step 612, the high pressure accumulator of the suspension system is pressurized by the weight of the vehicle on the suspension system 18 and in particular the dampers 60 located at each of the corners. Each corner may act independently. In step 614, valves are opened to communicate hydraulic fluid from the high-pressure accumulator in the suspension system to the brake system 18A and the steering system 18C. As mentioned above, the valves may be normally opened upon the loss of power. In Fig. 5, the valves may be opened under emergency power. In step 616, hydraulic fluid is communicated from the high pressure accumulator of the suspension system to the brake system through the opened valves. In step 618, the brake system and the steering system bring the vehicle to a safe resting place under the control of the vehicle operator.

## Claims

1. A hydraulic system (18) for a vehicle (10) comprising:
a first hydraulic fluid reservoir (92);
a braking system (18A) fluidically coupled to the first hydraulic fluid reservoir (92);
a second hydraulic fluid reservoir (94);
a suspension system (18B) fluidically coupled to the second hydraulic fluid reservoir (94);
**characterized in that:**
a valve system (90) selectively fluidically couples the braking system (18A) to the suspension system (18B), and selectively couples a steering system (18C) of the hydraulic system (18) to the second hydraulic fluid reservoir (94).

2. The hydraulic system of claim 1 wherein the first hydraulic fluid reservoir (92) is fluidically coupled to the second hydraulic fluid reservoir (94).

3. A hydraulic system (300) for a vehicle (10) comprising:
a first high-pressure accumulator (330A);
a braking system (18A) fluidically coupled to the first high pressure accumulator (330A);
a suspension system (18B) fluidically coupled to a second high pressure accumulator (330C);
**characterized in that:**
a valve system (320) selectively couples the braking system (18A) to the first high pressure accumulator (330A) or the second high pressure accumulator (330C).

4. The system of claim 3 further comprising a hydraulic pressure module (310) comprising the first high pressure accumulator (330A).

5. The system of claim 4 wherein the hydraulic pressure module (310) further comprises a pump (88) and a valve disposed between the high pressure accumulator and the pump.

6. The system of one of claims 4 or 5 further comprising pressure regulators regulating hydraulic fluid pressures into the braking system.

7. The system of one of claims 3 to 6 wherein the valve system comprises a first mode coupling a hydraulic pump to the first high pressure accumulator and a second mode operating the brake system with the pressurized hydraulic fluid from the second high pressure accumulator.

8. The system of one of claims 3 to7 wherein the valve system switches from the first mode to the second mode based on a power loss to the system or a malfunction of a pressure system.

9. The system of one of claim 3 to 8 further comprising a steering system (18C) fluidically coupled to the first high pressure accumulator and wherein the valve system selectively couples the braking system and steering system to the first high pressure accumulator or the second high pressure accumulator.

10. A method of operating a vehicle (10) comprising:
pressurizing (612) a first high-pressure accumulator (330C) associated with a suspension system (18B) with pressurized hydraulic fluid from a damper (60), said pressurizing caused by a weight of the vehicle;
communicating (616) the hydraulic fluid from the high pressure accumulator to a brake system (18A) through a valve system (320); and
operating (618) the brake system with the pressurized hydraulic fluid from the high pressure accumulator.

11. The method of claim 10 further comprising prior to communicating the hydraulic fluid from the high pressure accumulator, operating the brake system from a hydraulic pump (88) when the valve system (320) is disposed in a first mode and switching the valve system (320) to a second mode before operating the brake system (18A) with the pressurized hydraulic fluid from the high pressure accumulator.

12. The method of claim 10 wherein switching the valve system is based on a loss of power to the valve system.

13. The method of claim 10 wherein switching the valve system is based on a malfunction of a pressure system.

14. A system for operating a vehicle comprising:
a hydraulic pump (88);
a first high pressure accumulator (330A) receiving hydraulic fluid from the hydraulic pump;
a braking system (18A) coupled to the first high pressure accumulator (330A);
a second high pressure accumulator (330B) receiving hydraulic fluid from the hydraulic pump;
a steering system (18C) coupled to the second high pressure accumulator (330B);
a third high pressure accumulator (330C) receiving hydraulic fluid from the hydraulic pump;
a suspension system (18B) coupled to the third high pressure accumulator (330C);
**characterized in that:**
a valve system (320) selectively couples the braking system and steering system to the hydraulic pump or the third high pressure accumulator.

15. The system of claim 14 wherein the suspension system comprises an active ride height control system (74).

## Patentansprüche

1. Hydraulikanlage (18) für ein Fahrzeug (10) umfassend wie folgt:
einen ersten Behälter Hydraulikflüssigkeit (92);
ein Bremssystem (18A), das mit dem ersten Behälter Hydraulikflüssigkeit (92) fluidisch gekoppelt ist;
einen zweiten Behälter Hydraulikflüssigkeit (94);
ein Aufhängungssystem (18B), das mit dem zweiten Behälter Hydraulikflüssigkeit (94) fluidisch gekoppelt ist;
**dadurch gekennzeichnet, dass**
ein Ventilsystem (90) das Bremssystem (18A) auf selektive fluidisch Weise mit dem Aufhängungssystem (18B) und ein Lenksystem (18C) der Hydraulikanlage (18) auf selektive Weise mit dem zweiten Behälter Hydraulikflüssigkeit (94) koppelt.

2. Hydraulikanlage nach Anspruch 1, wobei der erste Behälter Hydraulikflüssigkeit (92) mit dem zweiten Behälter Hydraulikflüssigkeit (94) fluidisch gekoppelt ist.

3. Hydraulikanlage (300) für ein Fahrzeug (10) umfassend wie folgt:
einen ersten Hochdruck-Akkumulator (330A);
ein Bremssystem (18A), das mit dem ersten Hochdruck-Akkumulator (330A) fluidisch gekoppelt ist;
ein Aufhängungssystem (18B), das mit einem zweiten Hochdruck-Akkumulator (330C) fluidisch gekoppelt ist;
**dadurch gekennzeichnet, dass**
ein Ventilsystem (320) das Bremssystem (18A) auf selective Weise mit dem ersten Hochdruck-Akkumulator (330A) oder mit dem zweiten Hochdruck-Akkumulator (330C) koppelt.

4. Anlage nach Anspruch 3 ferner umfassend ein hydraulisches Druckmodul (310), das den ersten Hochdruck-Akkumulator (330A) umfasst.

5. Anlage nach Anspruch 4, wobei das hydraulische Druckmodul (310) ferner eine Pumpe (88) und ein Ventil, das zwischen dem Hochdruck-Akkmulator und der Pumpe angeordnet ist, umfasst.

6. Anlage nach einem der Ansprüche 4 oder 5 ferner umfassend Druckregler, die die Drücke der Hydraulikflüssigkeitsd in das Bremssystem regeln

7. Anlage nach einem der Ansprüche 3 bis 6, wobei das Ventilsystem einen ersten Betriebsmodus umfasst, bei dem eine Hydraulikpumpe mit dem ersten Hochdruck-Akkumulator gekoppelt wird, und einen zweiten Betriebsmodus, bei dem das Bremssystem mit der druckbeaufschlagten Hydraulikflüssigkeit aus dem zweiten Hochdruck-Akkumulator betrieben wird.

8. Anlage nach einem der Ansprüche 3 bis 7, wobei das Ventilsystem jeweils basierend auf einem Leistungsverlust für die Anlage oder einer Fehlfunktion eines Drucksystems von dem ersten Betriebsmodus in den zweiten Betriebsmodus umschaltet.

9. Anlage nach einem der Ansprüche 3 bis 8 ferner umfasend ein Lenksystem (18C), das mit dem ersten Hochdruck-Akkumulator fluidisch gekoppelt ist, und wobei das Ventilsystem auf selektive Weise das Bremssystem und das Lenksystem mit dem ersten Hochdruck-Akkumulator oder mit dem zweiten Hochdruck-Akkumulator koppelt.

10. Verfahren zum Betreiben eines Fahrzeugs (10) umfassend wie folgt:
Druckbeaufschlagen (612) eines ersten ersten Hochdruck-Akkumulators (330C), der mit neinem Aufhängungssystem (18B) assoziiert ist, mit einer druckbeaufschlagten Hydraulikflüssigkeit aus einem Dämpfer (60), wobei das Beaufschlagen mit Druck durch ein Fahrzeuggewicht verursacht wird;
Kommunizieren (616) der Hydraulikflüssigkeit aus dem Hochdruck-Akkumulator durch ein Ventilsystem (320) zu einem Bremssystem (18A); und
Betreiben (618) des Bremssystems mit der druckbeaufschlagten Hydraulikflüssigkeit aus dem Hochdruckakkumulator.

11. Verfahren nach Anspruch 10 ferner umfassend im Vorfeld des Kommunizierens der Hydraulikflüssigkeit aus dem Hochdruckakkumulator Betreiben des Bremssystems von einer Hydraulikpumpe (88) her, wenn das Ventilsystem (320) in einem ersten Betriebsmodus angeordnet ist, und Umschalten des Ventilsystems (320) in einen zweiten Betriebsmodus, bevor das Bremssystem (18A) mit der druckbeaufschlagten Hydraulikflüssigkeit aus dem Hochdruckakkumulator betrieben wird.

12. Verfahren nach Anspruch 10, wobei Umschalten des Ventilsystems auf einem Leistungsverlust für das Ventilssystem basiert.

13. Verfahren nach Anspruch 10, wobei Umschalten des Ventilsystems auf einer Fehlfunktion eines Drucksystems basiert.

14. Anlage zum Betreiben eines Fahrzeugs umfassend wie folgt:
eine Hydraulikpumpe (88);
einen ersten Hochdruck-Akkumulator (330A), der von der Hydraulikpumpe Hydraulikflüssigkeit empfängt;
ein Bremssystem (18A), das mit dem ersten Hochdruck-Akkumulator (330A) gekoppelt ist;
einen zweiten Hochdruck-Akkumulator (330B), der von der Hydraulikpumpe Hydraulikflüssigkeit empfängt;
ein Lenksystem (18C), das mit dem zweiten Hochdruck-Akkumulator (330B) gekoppelt ist;
einen dritten Hochdruck-Akkumulator (330C), der von der Hydraulikpumpe Hydraulikflüssigkeit empfängt;
ein Aufhängungssystem (18B), das mit dem dritten Hochdruck-Akkumulator (330C) gekoppelt ist;
**dadurch gekennzeichnet, dass**
ein Ventilsystem (320) auf selektive Weise das Bremssystem und das Lenksystem mit der Hydraulikpumpe oder dem dritten Hochdruck-Akkumulator koppelt.

15. Anlage nach Anspruch 14, wobei das Aufhängungssystem ein aktives Verfahrhöhen-Steuersystem (74) umfasst.

## Revendications

1. Système hydraulique (18) pour un véhicule (10) comprenant :
un premier réservoir de liquide hydraulique (92) ;
un système de freinage (18A) couplé fluidiquement au premier réservoir de liquide hydraulique (92) ;
un deuxième réservoir de liquide hydraulique (94) ;
un système de suspension (18B) fluidiquement couplé au deuxième réservoir de liquide hydraulique (94) ;
**caractérisé en ce que** :
un système de valve (90) couple sélectivement de manière fluidique le système de freinage (18A) au système de suspension (l8B), et couple sélectivement un système de direction (18C) du système hydraulique (18) au deuxième réservoir de liquide hydraulique (94).

2. Système hydraulique selon la revendication 1, dans lequel le premier réservoir de liquide hydraulique (92) est fluidiquement couplé au deuxième réservoir de liquide hydraulique (94).

3. Système hydraulique (300) pour un véhicule (10) comprenant :
un premier accumulateur haute pression (330A) ;
un système de freinage (18A) fluidiquement couplé au premier accumulateur haute pression (330A) ;
un système de suspension (18B) fluidiquement couplé à un deuxième accumulateur haute pression (330C) ;
**caractérisé en ce que** : un système de valve (320) couple sélectivement le système de freinage (18A) au premier accumulateur haute pression (330A) ou au deuxième accumulateur haute pression (330C).

4. Système selon la revendication 3 comprenant en outre un module de pression hydraulique (310) comprenant le premier accumulateur haute pression (330A).

5. Système selon la revendication 4 dans lequel le module de pression hydraulique (310) comprend en outre une pompe (88) et une valve disposée entre le premier accumulateur haute pression et la pompe.

6. Système selon l'une des revendications 4 ou 5 comprenant en outre des régulateurs de pression régulant les pressions de liquide hydraulique dans le système de freinage.

7. Système selon l'une des revendications 3 à 6 dans lequel le système de valve comprend un premier mode couplant une pompe hydraulique au premier accumulateur haute pression et un deuxième mode actionnant le système de freinage avec le liquide hydraulique pressurisé à partir du deuxième accumulateur haute pression.

8. Système selon l'une des revendications 3 à 7 dans lequel le système de valve passe du premier mode au deuxième mode sur la base d'une perte de puissance du système ou d'un dysfonctionnement d'un système de pression.

9. Système selon l'une des revendications 3 à 8 comprenant en outre un système de guidage (18C) couplé fluidiquement au premier accumulateur haute pression et dans lequel le système de valve couple sélectivement le système de freinage et le système de guidage au premier accumulateur haute pression ou au deuxième accumulateur haute pression.

10. Procédé d'actionnement d'un véhicule (10) comprenant :
pressurisation (612) d'un premier accumulateur haute pression (330C) associé à un système de suspension (18B) avec du liquide hydraulique pressurisé provenant d'un amortisseur (60), ladite pressurisation étant causée par un poids du véhicule ;
communication (616) du liquide hydraulique en provenance de l'accumulateur haute pression à un système de freinage (18A) à travers un système de valve (320) ; et
actionnement (618) du système de freinage avec le liquide hydraulique pressurisé provenant de l'accumulateur haute pression.

11. Procédé selon la revendication 10 comprenant en outre, avant communication du liquide hydraulique provenant de l'accumulateur haute pression, l'actionnement du système de freinage à partir d'une pompe hydraulique (88) lorsque le système de valve (320) est disposé dans un premier mode et la commutation du système de valve (320) à un deuxième mode avant l'actionnement du système de freinage (18A) avec le liquide hydraulique provenant de l'accumulateur haute pression.

12. Procédé selon la revendication 10 dans lequel la commutation du système de valve est basée sur une perte de puissance du système de valve.

13. Procédé selon la revendication 10 dans lequel la commutation du système de valve est basée sur un dysfonctionnement du système de pression.

14. Système d'actionnement d'un véhicule comprenant :
une pompe hydraulique (88) ;
un premier accumulateur haute pression (330A) recevant le liquide hydraulique de la pompe hydraulique ;
un système de freinage (18A) couplé au premier accumulateur haute pression (330A) ;
un deuxième accumulateur haute pression (330B) recevant le liquide hydraulique de la pompe hydraulique ;
un système de guidage (18C) couplé au deuxième accumulateur haute pression (330B) ;
un troisième accumulateur haute pression (330C) recevant le liquide hydraulique de la pompe hydraulique ;
un système de suspension (18B) couplé au troisième accumulateur haute pression (330C) ;
**caractérisé en ce que** :
un système de valve (320) couple sélectivement le système de freinage et le système de guidage à la pompe hydraulique ou au troisième accumulateur haute pression.

15. Système selon la revendication 14 dans lequel le système de suspension comprend un système de contrôle actif de la hauteur de conduite (74).
